# EUROPEAN PATENT APPLICATION

(11) **EP 1 367 787 A2**
(43) Date of publication of application: **03.12.2003**
(21) Application number: 03011950.7
(22) Date of filing: 27.05.2003
(51) Int. Cl.: H04L 12/64

(54) **Network apparatus and network method**

(30) Priority: 31.05.2002 JP 2002159513
(71) Applicant: Kabushiki Kaisha Toshiba, Tokyo (JP)
(72) Inventor: Miura, Hiroyasu, Toshiba Corporation, Minato-ku, Tokyo 105-8001 (JP)
(74) Representative: Henkel, Feiler, Hänzel

(57) **Abstract**

A network apparatus having a first converting section (19) which receives first packet signals (YC1, YC2) of a plurality of channels in a wired network communication, and respectively converts the first packet signals into second packet signals (MC1, MC2) of a plurality of channels in a wireless network communication, and a second converting section 18 which receives third packet signals (MC1, MC2) of a plurality of channels in the wireless network communication from an external network apparatus, and respectively converts other packet signals into third packet signals (YC1, YC2) of a plurality of channels in the wired network communication to output the same.

## Description

The present invention relates to a network apparatus, particularly to a network apparatus and a network method for relaying a wired LAN and a wireless LAN.

In recent years, a network system such as a wireless LAN has become widely used, and a response to an existing wired LAN has become a problem.

Here, there is considered an example where two IEEE 1394 networks are relayed by the IEEE 802.11a wireless LAN. It is assumed that digital data such as video/speech data, or the like which a transmitter connected to the IEEE 1394 networks receives is transmitted to a network apparatus via the IEEE 1394 bus in a similar manner. At this time, in the network apparatus, the data is transmitted to a network apparatus at a receiving side by a radio frequency of 5 GHz defined in the IEEE 802.11a and a multiplexing system (OFDM = Orthogonal Frequency Division Multiplexing).

In the network apparatus, it is assumed that a data format defined in the IEEE 802.11a is converted into a data format defined in the IEEE 1394 to be output to the 1394 bus. Then, for example, a digital recorder configuring another IEEE 1394 network connected to the 1394 bus performs receiving and recording.

Here, the frequency of 5 GHz used for transmission in the network conversion apparatus is selected from among four frequencies of 5.17 GHz (34ch), 5.19 GHz (38ch), 5.21 GHz (42ch), and 5.23 GHz (46ch) defined in ARIB STD-T71, 1.0 version (enacted on 14 December, 2000), which is not used in neighboring area. A channel bandwidth of each frequency is 18 MHz at maximum. Generally, one frequency is selected from among the four frequencies, the maximum transmission speed thereof is 54 Mbps, and a modulation system employs 64 QAM system at the highest transmission speed.

However, in the network relay apparatus in this case, although the maximum speed per channel is 54 Mbps, the effective transmission speed is on the order of 20 Mbps. Therefore, there is a problem that a wireless transmission of a high-definition (HD) video program whose transmission rate reaches about 25 Mbps cannot be performed by a conventional wireless transmission system using one channel.

In other words, there is a problem that, in order to distribute a high-definition (HD) video program having the transmission rate on the order of 25 Mbps from a transmitter or the like utilizing the IEEE 1394 or the like which is a representative standard of a wired LAN, even when transfer is performed using the network apparatus having the effective transmission speed of about 20 Mbps, the transfer rate is insufficient so that the high-definition (HD) video program cannot be transmitted with high quality.

It is an object of the present invention to provide a network apparatus and method therefor capable of making use of a plurality of channels of a packet signal in a wireless network communication to correspond a rate and the like to a network wired communication, thereby relaying the network wired communication by the network wireless communication.

According to an embodiment of the present invention, a network apparatus comprising a first converting section (19) which receives first packet signals (YC1, YC2) of a plurality of channels in a wired network communication, and respectively converts the first packet signals into second packet signals (MC1, MC2) of a plurality of channels in a wireless network communication to transmit the same; and a second converting section (18) which converts other packet signals into third packet signals (YC1, YC2) of a plurality of channels in the wired network communication.

According to the above configuration, the network apparatus according to the present invention shows assigning of the packet signals in the wired network communication in which a plurality of channels are set in time division to the packet signals in the wireless network communication in which a plurality of channels are set in frequency division. Thereby, a plurality of channels can be communicated between the wired network communication and the wireless network communication which have different communication protocols from each other. Further, at the same time, when one channel among a plurality of channels is fast in the wired network communication, this channels is also divided into a plurality of channels to be transmitted so that the wireless network communication can be performed without deteriorating the communication rate.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a system diagram showing a configuration of a network system according to one embodiment of the present invention;
FIG. 2 is a block diagram showing a configuration of the network apparatus according to one embodiment of the present invention;
FIG. 3 is an explanatory diagram for explaining a process of dividing the IEEE 1394 isochronous packet into odd/even packets in a network apparatus according to a first embodiment of the present invention;
FIG. 4 is a diagram showing a CIP header configuration of an isochronous packet according to the present invention;
FIG. 5 is an explanatory diagram for explaining a process of dividing the isochronous packet into packets per isochronous channel in a network system according to a second embodiment of the present invention;
FIG. 6 is a diagram showing a configuration of an isochronous packet header according to the present invention;
FIG. 7 is a diagram showing a configuration of an isochronous packet according to the present invention;
FIG. 8 is an explanatory diagram for explaining an operation of dividing an isochronous packet into channels and odd/even packets in a network apparatus according to a third embodiment of the present invention;
FIG. 9 is a diagram showing a configuration of a wireless LAN packet according to the present invention;
FIG. 10A is a diagram showing a signal form of a wired LAN packet in the network apparatus according to the present invention;
FIG. 10B is a diagram showing a signal form of a wireless LAN packet in the network apparatus according to the present invention;
FIG. 11 is a flow chart for explaining a dividing process at transmission in the network apparatus according to the present invention; and
FIG. 12 is a flow chart for explaining a combining process at reception in the network apparatus according to the present invention.

Hereinafter, a network apparatus and a network system using the same according to embodiments of the present invention will be described in detail with reference to the drawings.

### <Network radio relay system>

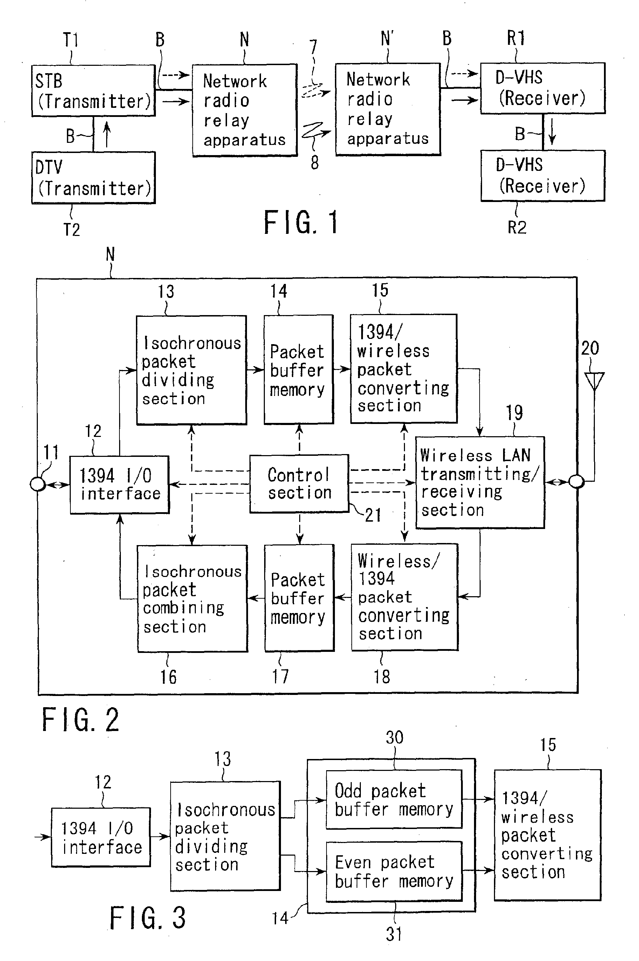

FIG. 1 is a system diagram showing a configuration of the network apparatus according to one embodiment of the present invention, and FIG. 2 is a block diagram showing a configuration of the network apparatus.
In FIGS. 1 and 2, the network system according to the present invention has a STB (Set Top Box) T1 which is a transmitter connected by the IEEE 1394 which is a standard of a wired LAN, a DTV (Digital Television) T2 which is a transmitter, and a network apparatus N which transmits/receives a signal by the IEEE 1394. Further, the network system has this network apparatus N, the other network apparatus N' which relays a signal by wireless communication with the IEEE 802.11a which is a standard of a wireless LAN, and two receivers D-VHS R1 and R2 which are connected with the IEEE 1394 bus B and communicated with the IEEE 1394 which is the standard of the wired LAN. In such a network system, it is characteristic that a plurality of wireless channels 7 and 8 are simultaneously used between the network apparatus N and the network apparatus N', and further, more than two channels, for example, four channels can be used.

### (Configuration of network apparatus)

The network apparatus N according to the present invention appropriately utilizes a plurality of channels of the wireless LAN as a function specific to the present invention depending on the situation when a packet signal of the wired LAN is converted into a packet signal of the wireless LAN. In FIG. 2, the configuration therefor has a IEEE 1394 input connector 11 which is the wired LAN, a 1394 I/O interface 12 connected thereto to which input data such as video/speech information or the like is supplied, and an isochronous packet dividing section 13 further connected thereto which divides an isochronous packet into a plurality of groups under a certain condition. Further, the configuration has a packet buffer memory 14 which stores the isochronous packet in response to this output, a 1394/wireless packet converting section 15 which converts a packet format defined in the IEEE 1394 into a packet format defined in the IEEE 802.11a in response to the read isochronous packet, and a wireless LAN transmitting/receiving section 19 which performs digital modulating and multiplexing (OFDM = Orthogonal Frequency Division Multiplexing) in response to this output so as to output as a radio signal of the wireless LAN, which is connected to a transmitting/receiving antenna 20. Each unit described above is connected to a control section 21 which controls each operation.

Further, this network apparatus N has a wireless/1394 packet converting section 18 which is connected to the above wireless LAN transmitting/receiving section 19 and converts a wireless packet defined in the IEEE 802.11a into an isochronous packet defined in the IEEE 1394, a packet buffer memory 17 in which this converted packet is stored, and an isochronous packet combining section 16 which combines the isochronous packets, which are specific to the present invention, under a certain condition. The isochronous packet combining section 16 is connected to the 1394 I/O interface 12, and further each section is connected to the above control section 21, and the operation thereof is controlled.

### <Operation of network apparatus>

### (Division/combination of fast packet according to first embodiment)

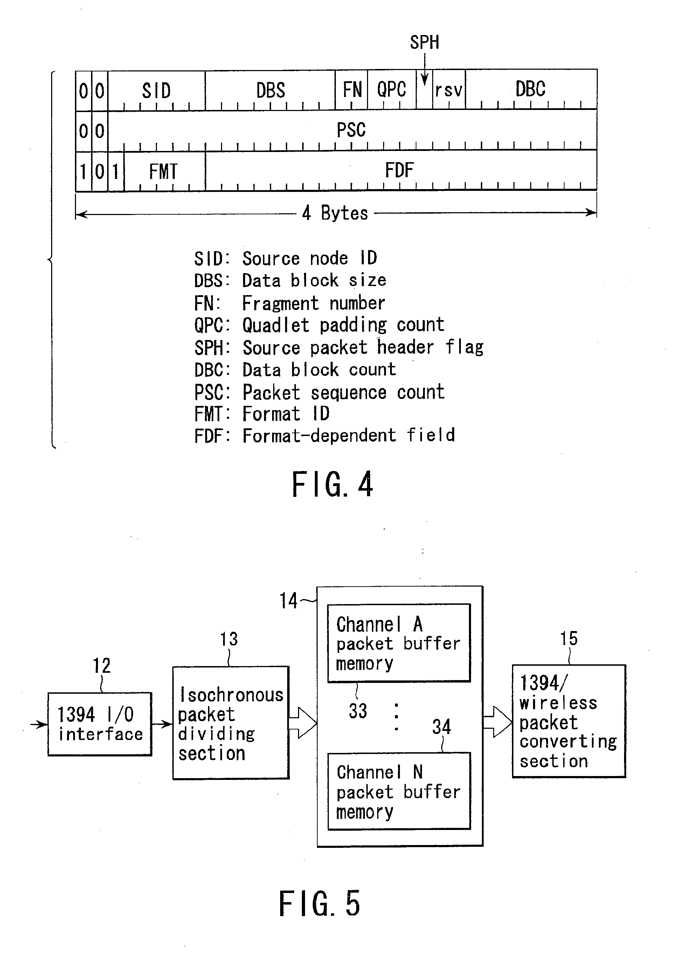

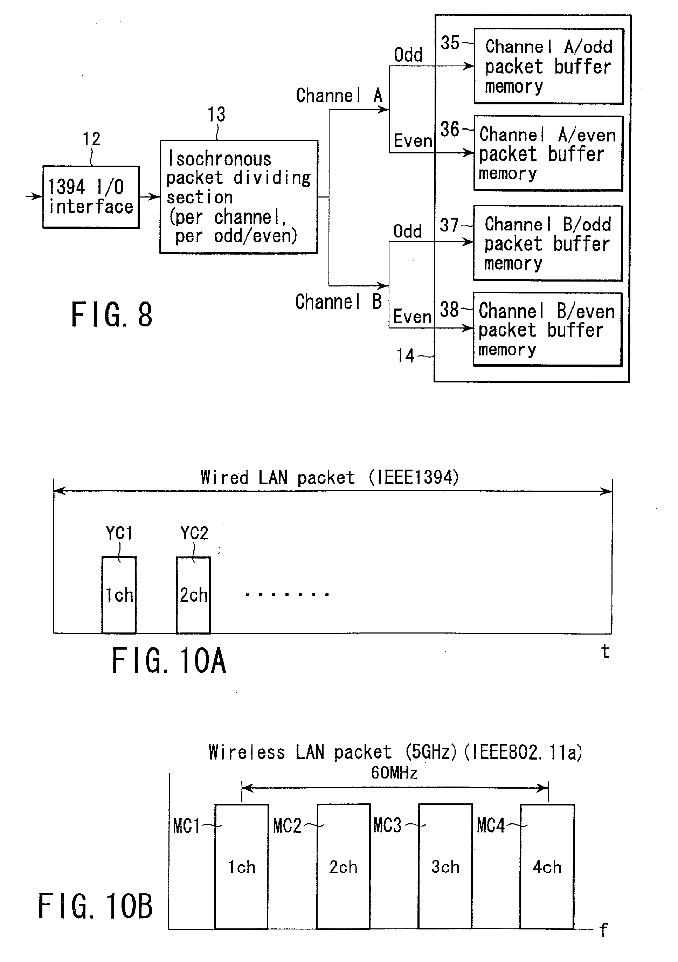

A first embodiment provides a method for, when a packet signal of the wired LAN is not less than a predetermined rate, dividing the packet signal and assigning to packet signals of a plurality of channels in the wireless LAN. FIG. 3 is an explanatory diagram for explaining a process of dividing the IEEE 1394 isochronous packet into odd/even packets in the network apparatus according to the first embodiment of the present invention, FIG. 4 is a diagrams showing a CIP header configuration of the isochronous packet, FIG. 9 is a diagram showing a configuration of a wireless LAN packet, FIG. 10A is a diagram showing a signal form of a wired LAN packet in the network apparatus according to the present invention, and FIG. 10B is a diagram showing a signal form of a wireless LAN packet in the network apparatus according to the present invention.

When a signal handled in the IEEE 1394 of the wired LAN is, for example, a signal of high-definition (HD) video program whose transmission rate reaches about 25 Mbps (Bit Per Second), the signal can be transmitted in the IEEE 802.11a which is a wireless LAN whose theoretical maximum transmission speed is 54 Mbps, but the effective transmission speed is on the order of 20 Mbps so that the signal cannot be stably transmitted. On the contrary, according to the present invention, the isochronous packet of the wired LAN is divided into a plurality of packets, which are assigned to a plurality of channels of the IEEE 802.11a to be transmitted.

In other words, input data such as video/speech signal or the like input form the IEEE 1394 input connector 11 is received in the 1394 I/O interface 12. Thereafter, the data is transmitted to the isochronous packet dividing section 13, and the transfer rate of the isochronous packet is observed by the control section 21. When the transfer rate is not less than a predetermined rate, for example, not less than 20 Mbps, it is determined that the data has to be divided. When the transfer rate is less than the predetermined rate, the data is subjected to packet conversion without being divided.

When the control section 21 determines to divide the packet, as one dividing method, consecutive packets are divided into odd and even packets to be processed. Further, it is possible to divide the packets into two by other element, and further it is possible to divide the packets into three or four packets so that many dividing processes are performed so as to improve the transfer rate.

The CIP (Common Isochronous Packet) header configuration of the isochronous packet is shown in FIG. 4, and a PSC (Packet Sequence Counter) which is newly expansion-defined is detected by the control section 21 so that the packet is determined whether to be odd number or even number. As shown in FIG. 3, the packets are divided into an odd packet buffer memory 30 and an even packet buffer memory 31 by the isochronous packet dividing section 13 to be temporarily stored. In this example, the PSC area has 30 bits, but can be appropriately changed according to the assumed total amount of transmission data.

In addition, in the case where the PSC area has 30 bits as in this example, when the isochronous packet is taken into per 125 µs on the basis of the IEEE 1394 isochronous definition, the PSC value can be assigned up to data for 2³⁰/(8000×60×60)=37.3 hours without overlapping under the condition of 8000 packets per second, therefore 30 bits=2³⁰. The PSC having this length is practically sufficient.

Next, the isochronous packet output from the packet buffer memory 14 is transmitted to the 1394/wireless packet converting section 15, and is converted into the packet format defined in the IEEE 802.11a. FIG. 9 shows a packet form of the IEEE 802.11a, which is configured with a wireless packet header, an isochronous packet header, and a data portion of the isochronous packet.

Thereafter, this packet is transmitted to the wireless LAN transmitting/receiving section 19 to be subjected to the digital modulating and multiplexing (OFDM), and then is transmitted by the transmitting/receiving antenna 20 using a plurality of frequency channels. Here, FIG. 10A shows an example of the IEEE 1304 packet of the wired LAN, and FIG. 10B shows an example of the IEEE 802.11a packet of the wireless LAN. It is found that the IEEE 1394 channel signal is time-divided, on the other hand, the IEEE 802.11a packet is frequency-divided.

In other words, up to 63 channels can be set during 125 µs by the IEEE 1394, which is generally used by adding only 1-channel (YC1) or additionally 2-channel (YC2). On the other hand, when the IEEE 802.11a packet has, for example, a signal of 5 GHz, the packet can use four channel signals MC1, MC2, MC3, and MC4, that is 5.17 GHz (34ch), 5.19 GHz (38ch), 5.21 GHz (42ch), and 5.23 GHz (46ch).

Here, the isochronous packet YC1 not less than a predetermined rate is divided into two packets by the isochronous packet dividing section 13, the respective packets are supplied to the 1394/wireless packet converting section 15 to be converted, and are transmitted as the wireless LAN packets MC1 and MC2 of a plurality of channels from the wireless LAN transmitting/receiving section 19 via the transmitting/receiving antenna 20 to the other network apparatus N'.

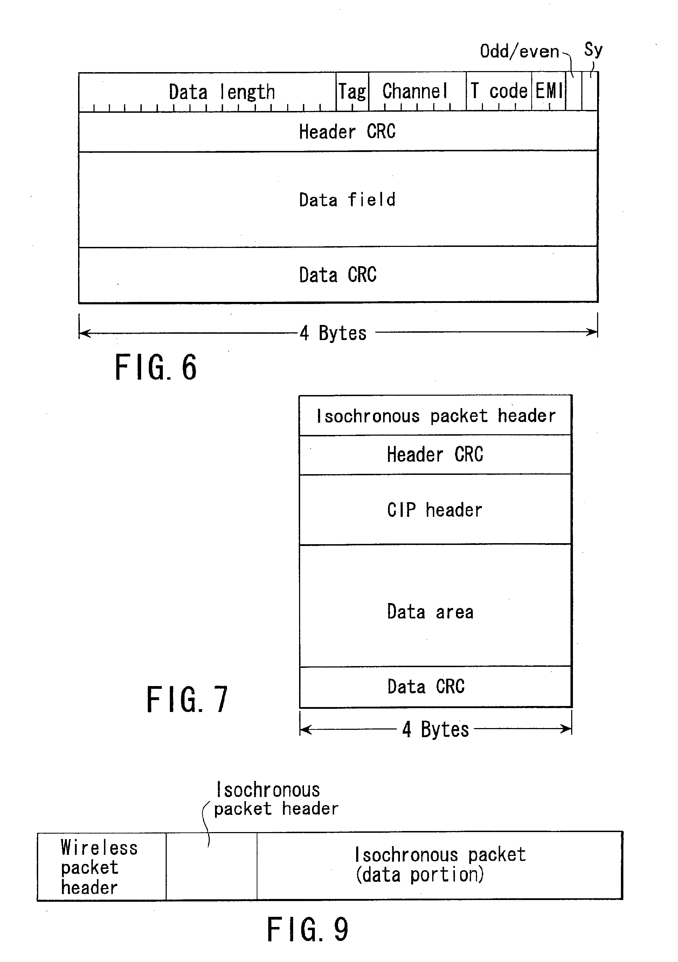

On the other hand, there will be described the case where the packet from the other network apparatus N' is received. Wireless data of a plurality of frequency channels received in the transmitting/receiving antenna 20 is received in the wireless LAN transmitting/receiving section 19, and is demodulated to be transmitted to the wireless/1394 packet converting section 18. Here, the data is converted from the wireless packet into the isochronous packet defined in the IEEE 1394 as shown in FIG. 7. This isochronous packet is transmitted to the buffer memory 17 to be temporarily stored. Next, the isochronous packet output from the buffer memory 17 is transmitted to the isochronous packet combining section 16, where a determination is made as to whether or not the packet is divided by the other network apparatus N' and needs combining by the control section 21 with management information utilizing a reserve area of the IEEE 802.11a packet header. In other words, when the packet is divided and needs combining, the fact is indicated with "1" by the management information, and when the packet is not divided and does not need combining, the fact is indicated with "0" by the management information.

Further, after the packet is converted into the IEEE 1394 in the converting section 15, this management information is handled as the management information in the reserve area of the IEEE 1394 header. The reserve area of the IEEE 802.11a header has 1 bit, and the reserve area of the IEEE 1394 header has 2 bits, respectively.

When it is determined that combining is needed, the packets are combined as one channel packet to be restored, which are output via the 1394 I/O interface 12.

Hereinbefore, according to the network apparatus of the present invention, the packet such as the IEEE 1394 or the like which exceeds a predetermined rate is divided into, for example, odd/even numbers to be transmitted as a plurality of channel packets of the IEEE 802.11a, or to be subjected to a reverse procedure for reception so that the wired network communication can be wirelessly relayed by the wireless network communication without deteriorating the transfer rate.

### (Correspondence of certain channel according to second embodiment)

A second embodiment provides a method for, when a packet signal in the wired communication has a plurality of channels, assigning this to a plurality of channels of the packet signal in the wireless communication. FIG. 5 is an explanatory diagram showing a process of dividing the isochronous packet into packets per isochronous channel in the network apparatus according to the second embodiment of the present invention, FIG. 6 is a diagram showing a configuration of the isochronous packet header, and FIG. 7 is a diagram showing a configuration of the isochronous packet.

The second embodiment provides a process of dividing the isochronous packet of a plurality of channels per isochronous channel on the 1394 bus and combining the same. Thereby, the transmission rate per isochronous channel is not more than 20 Mbps, but a plurality of channels are simultaneously transmitted so that, even when the transmission rate exceeds 20 Mbps in total, the channels can be relayed by the network wireless communication.

A shown in FIG. 5, in the isochronous packet dividing section 13, the isochronous packets are collected per channel by a channel field (6 bits) in the isochronous packet header shown in FIG. 6, and are temporarily stored in the packet buffer memory from a channel A33 to a channel N34. Next, the packet output from the packet buffer memory 14 is transmitted to the 1394/wireless packet converting section 15, and is simultaneously transmitted using a plurality of wireless channels (MC1 to MC4) as shown in FIG. 10B.

On the other hand, at reception, the data is converted from the wireless packet into the IEEE 1394 isochronous packet per channel. In the isochronous packet combining section 16, the isochronous packet per channel is inserted into a data transfer cycle of 125 µs so that the original isochronous transfer packet of a plurality of channels is restored and the 1394 I/O interface is restored.

Hereinbefore, in the network apparatus according to the second embodiment, the packet signal of a plurality of channels in the wired network communication such as the IEEE 1394 is also divided per channel and transmitted as the packet signal of each channel in the wireless network communication such as the IEEE 802.11a so that the packet signal of a plurality of channels in the wired network communication can be wirelessly relayed by the wireless network communication without deteriorating the communication rate.

### (Complex process according to third embodiment)

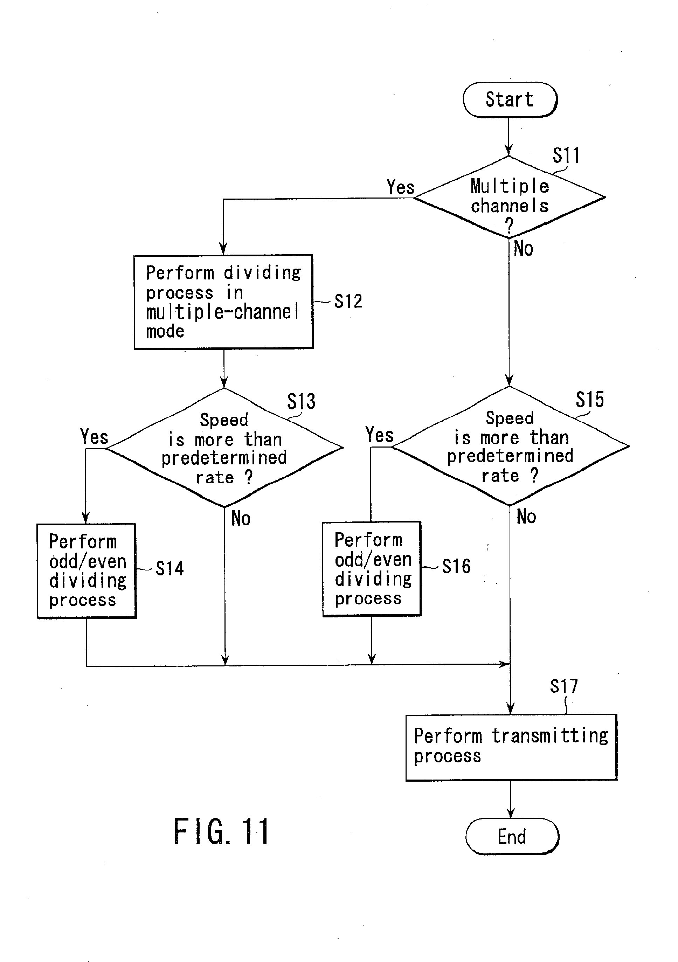

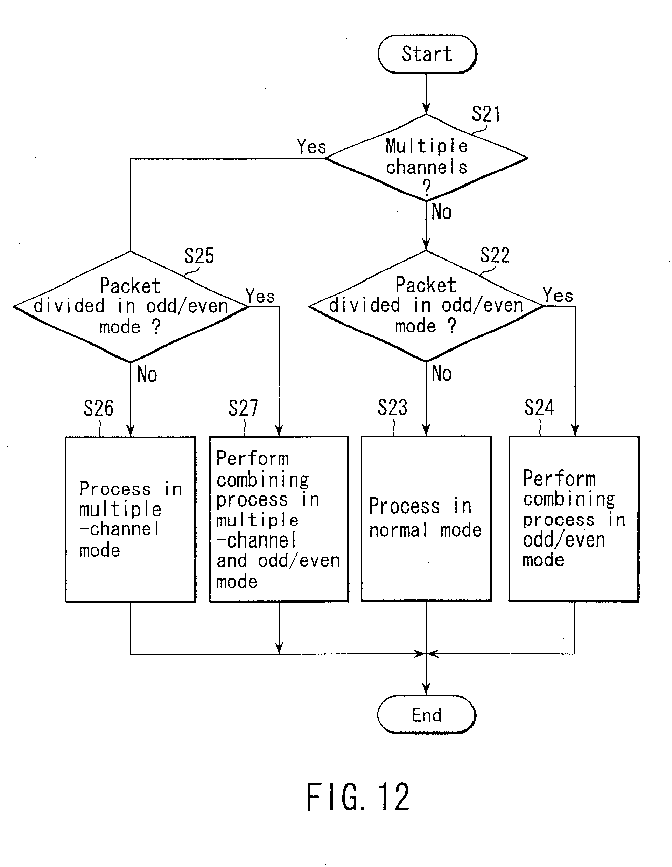

A third embodiment provides the case where the fast packet process according to the first embodiment and the channel assigning process according to the second embodiment are simultaneously performed. FIG. 8 is an explanatory diagram for explaining an operation of dividing the isochronous packet into channels and odd/even packets in the network apparatus according to the third embodiment, FIG. 11 is a flow chart for explaining a dividing process at transmission in the network apparatus according to the present invention, and FIG. 12 is a flow chart for explaining a combining process at reception in the network apparatus according to the present invention.

In these drawings, the third embodiment shows the case where the fast packet process according to the first embodiment and the channel assigning process according to the second embodiment are simultaneously performed. In other words, the third embodiment is applied to the case where data whose transmission rate per channel exceeds 20 Mbps is transmitted in a plurality of isochronous channels.

The data received in the 1394 I/O interface 12 is divided by the isochronous packet dividing section 13 in a dividing mode determined in the control section 21, and is temporarily stored in the buffer memory 14. In other words, in the flow chart in FIG. 11, the control section 21 determines whether or not the data has a plurality of channels (S11). When the data has a plurality of channels, the control section 21 determines to divide in the multiple-channel mode (S12), and further a determination is made as to whether or not the transfer speed per channel is not less than a predetermined rate (S13). When the transfer rate is not less than the predetermined rate, it is determined that the dividing process is performed, for example, according to the odd/even number of the packet number (S14). When the transfer rate is less than the predetermined rate, the dividing according to the rate is not performed.

Further, when it is determined in step S11 that the data does not have a plurality of channels, a determination is made as to whether or not the transfer rate in the channel is not less than the predetermined rate (S15). When the transfer rate is not less than the predetermined rate, it is determined that the dividing process is performed, for example, according to the odd/even number of the packet number (S16). When the transfer rate is less than the predetermined rate, the dividing according to the transfer rate is not performed.

Therefore, the dividing process as shown in FIG. 8 is performed in the isochronous packet dividing section 13 in the dividing mode determined according to the flow chart in FIG. 11. As a result, for example, the channels are divided into a channel A and a channel B, and further each channel is divided into odd/even channels to be stored in the buffer memory 14 with a channel A/odd packet buffer memory area 35, a channel A/even packet buffer memory area 36, a channel B/odd packet buffer memory area 37, and a channel B/even packet buffer memory area 38 in a divided manner.

Thereafter, the packets in these areas are corresponded to the respective packets MC 1 to MC 4 of the four channels in FIG. 10B, and are converted by the 1394/wireless packet converting section 15 to be transmitted by the wireless LAN transmitting/receiving section 19 (S17).

On the other hand, at reception, as shown in the flow chart in FIG. 12, a determination is made as to whether or not the reception packet is originally the isochronous packet of a plurality of channels (S21). When the isochronous packet is originally the isochronous packet of a plurality of channels, a determination is further made as to whether or not the isochronous packet is a packet divided in the odd/even mode (S25). When the isochronous packet is a packet divided in the odd/even mode, it is determined that the packet has to be combined in the multiple-channel and odd/even mode (S27). Otherwise, it is determined that the packet has to be processed in the multiple-channel mode (S26).

Further, when it is determined in step S21 that the packet is not transmitted in the multiple-channel mode originally, further a determination is made as to whether or not the packet is a packet divided in the odd/even mode (S22). When the packet is a packet divided in the odd/even mode, it is determined that the packet has to be combined in the odd/even mode (S24). Otherwise, it is determined that the packet has to be processed in the normal mode (S23). In addition, even the packet divided by another method is detected and subjected to a reverse process of the dividing process to be combined.

As described above, the control section 21 detects and determines the reception packet received in the wireless LAN transmitting/receiving section 19 as the management information provided in the reserve area of the IEEE 802.11a header as described above so that at least one of the four operation modes is determined. Thereby, the packet converted in the wireless/1394 packet converting section 18 is combined by the isochronous packet combining section 16 according to the determined operation mode so as to be restored to the packet per channel before the dividing process and to be output from the 1394 I/O interface 12.

As described above in detail, in the third embodiment, the IEEE 1394 wireless LAN packet signal of one or a plurality of channels is output as the IEEE 802.11a wireless LAN packet signal via the required dividing process according to the determination of the control section. Further, the received IEEE 802.11a wireless LAN packet signal is also output as the IEEE 1394 wireless LAN packet signal via the required combining process according to the determination of the control section. Thereby, it is possible to wirelessly relay the wired network communication by the wireless network communication without deteriorating the transfer rate depending on the situation.

According to various embodiments described above, those skilled in the art can realize the present invention, but can readily devise various modifications of these embodiments, and apply the present invention to various embodiments without inventive capability. Therefore, the present invention covers a wide range which is not contradictory to the disclosed principle and novel features, and is not limited to the above embodiments.

For example, in the above embodiments, description is made on the case where the IEEE 1394 network is relayed by the IEEE 802.11a wireless LAN, but, even when other protocol such as the USB.2.0, the IEEE 802.11b, or the like is employed, similar effect having similar spirit can be obtained.

Further, also in the dividing method, not only the packet data is divided into the odd/even packets, but also may be n-divided by an integer n to be combined, and even when the packet is divided by other method, similar effect can be obtained.

Hereinbefore, it is possible to provide a network apparatus and method therefor capable of making use of a plurality of channels of a packet signal in the wireless network communication to correspond a rate and the like to a network wired communication, thereby relaying the network wired communication by the network wireless communication.

## Claims

1. A network apparatus **characterized by** comprising:
a first converting section (19) which receives first packet signals (YC1, YC2) of a plurality of channels in a wired network communication, and respectively converts the first packet signals into second packet signals (MC1, MC2) of a plurality of channels in a wireless network communication to transmit the same; and
a second converting section (18) which converts other packet signals into third packet signals (YC1, YC2) of a plurality of channels in the wired network communication.

2. A network apparatus according to claim 1, **characterized by** further comprising:
a first control section (12, 21) which receives a packet signal (YC1) in a wired network communication, and determines whether or not to divide the packet signal into a plurality of packet signals;
a dividing section (13, 14) which, when the first control section determines to divide the packet signal, divides the packet signal (YC1), and supplies it to the first converting section as the first packet signal;
a second control section (18, 21) which determines whether or not to combine the third packet signals (YC1, YC2) of a plurality of channels converted by the converting section; and
a combining section (16) which, when the second control section determines to combine the third packet signals, combines the third packet signals of a plurality of channels to a fourth packet signal (YC1) of a single channel to output the same.

3. A network apparatus according to claim 2, **characterized in that**, when the fourth packet signal is a single channel.

4. A network apparatus according to claim 2, **characterized in that**, when a first packet signal in the wired network communication is faster than a predetermined rate, the first control section determines to divide the first packet signal (YC1).

5. A network apparatus according to claim 2, **characterized in that**, when the first packet signal in the wired network communication is faster than a predetermined rate, the first control section determines to divide the first packet signal (YC1),
when the first control section determines to divide the first packet signal, the dividing section divides the first packet signal according to whether a packet number of consecutive packets of the first packet signal (YC1) is odd or even.

6. A network apparatus according to claim 2, **characterized in that**, when a first packet signal in the wired network communication is faster than a predetermined rate, the first control section determines to divide the first packet signal (YC1),
when the first control section determines to divide the first packet signal, the dividing section divides the first packet signal into more than two on the basis of a packet number of consecutive packets of the first packet signal (YC1).

7. A network apparatus according to claim 2, **characterized in that** the wired network is a communication performed in the IEEE 1394, and the wireless network is a communication performed in the IEEE 802.11a or the IEEE 802.11b.

8. A network apparatus according to claim 1, **characterized in that** the first converting section further has a first control section (12, 21) which determines whether or not to divide each of the first packet signals (YC1, YC2) of a plurality of channels in the wired network communication into a plurality of packet signals; and
a dividing section (13, 14) which, when the first control section determines to divide the first packet signal, divides at least one of the plurality of divided packet signals (YC1, YC2) into a plurality of packet signals (35, 36, 37, 38), and
the first converting section corresponds the plurality of divided packet signals to the number of channels after division of the plurality of fist packet signals divided by the dividing section, and respectively converts the plurality of divided packet signals into second packet signals (MC1, MC2, MC3, MC4) having the same number of channels in a wireless network communication to transmit the same.

9. A network apparatus according to claim 1, **characterized in that** the converting section further has a second control section (18, 21) which determines whether or not to combine the respective third packet signals (YC1, YC2, YC3, YC4) of a plurality of channels in the wired network communication to which the third packet signals (MC1, MC2, MC3, MC4) of a plurality of channels in the wireless network communication are converted; and
a combining section (16) which, when the second control section determines to combine the third packet signals, combines the third packet signals of a plurality of channels in the wired network communication to output the same as the third packet signals (YC1, YC2) restored to packets before division.

10. A network apparatus according to claim 1, **characterized in that** the first converting section further has a first control section (12, 21) which, when a first packet signal in the wired network communication is faster than a predetermined rate, determines to divide each of the first packet signals (YC1, YC2) of a plurality of channels in the wired network communication into a plurality of packet signals; and
a dividing section (13, 14) which, when the first control section determines to divide the first packet signal, divides at least one of the plurality of divided packet signals (YC1, YC2) into a plurality of packet signals (35, 36, 37, 38), and
the first converting section corresponds the plurality of divided packet signals to the number of channels after division of the plurality of divided packet signals divided by the dividing section, and respectively converts the plurality of divided packet signals into second packet signals (MC1, MC2, MC3, MC4) having the same number of channels in a wireless network communication to transmit the same.

11. A network apparatus according to claim 1, **characterized in that** the wired network is a communication performed in the IEEE 1394, and the wireless network is a communication performed in the IEEE 802.11a or the IEEE 802.11b.

12. A network method **characterized by** comprising:
receiving first packet signals (YC1, YC2) of a plurality of channels in a wired network communication, and respectively converting the first packet signals into second packet signals (MC1, MC2) of a plurality of channels in a wireless network communication (19) to output the same (18); and
receiving other packet signal (MC1, MC2) of a plurality of channels in the wireless network communication, and respectively converting the other packet signals into third packet signals (YC1, YC2) of a plurality of channels in the wired network communication.

13. A network method according to claim 12,
**characterized by** further comprising:
receiving a packet signal (YC1) in a wired network communication, and determining whether or not to divide the packet signal into a plurality of packet signals (12, 21);
when the determining determines to divide the packet signal, dividing the packet signal (YC1) and supplying the same to the step of transmitting as the first packet signal (13, 14);
determining whether or not to combine the converted third packet signals (YC1, YC2) of a plurality of channels (18, 21); and
when the determining determines to combine the third packet signals, combining the third packet signals of a plurality of channels into a fourth packet signal (YC1) of a single channel (16).

14. A network method according to claim 13, **characterized in that**, when the fourth packet signal is a single channel.

15. A network method according to claim 12, **characterized in that**, when a first packet signal in the wired network communication is faster than a predetermined rate, the determining determines to divide the first packet signal (YC1).

16. A network method according to claim 12, **characterized in that** the determining further has the steps of determining whether or not to divide each of the first packet signals (YC1, YC2) of a plurality of channels in the wired network communication into a plurality of packet signals (12, 21); and
when the determining determines to divide the first packet signal, dividing at least one of the plurality of divided packet signals (YC1, YC2) into a plurality of packet signals (35, 36, 37, 38) (13, 14); and
the determining corresponds the first packet signals to the number (cf. four) of channels of the plurality of divided first packet signals, and respectively converts the plurality of divided packet signals into second packet signals (MC1, MC2, MC3, MC4) having the same number of channels in a wireless network communication.
